# EUROPEAN PATENT APPLICATION

(11) **EP 4 694 567 A1**
(43) Date of publication of application: **11.02.2026**
(21) Application number: 24783979.8
(22) Date of filing: 19.02.2024
(51) Int. Cl.: H04W 76/28

(54) **INFORMATION PROCESSING METHOD AND APPARATUS, AND READABLE STORAGE MEDIUM**

(30) Priority: 07.04.2023 CN 202310367880
(71) Applicant: Datang Mobile Communications Equipment Co., Ltd., Beijing 100085 (CN)
(72) Inventor: CHEN, Li, Beijing 100085 (CN); ZHAO, Yali, Beijing 100085 (CN); BERTRAND, Pierre, Beijing 100085 (CN)
(74) Representative: Maiwald GmbH
(86) International application number: PCT/CN2024/077497
(87) International publication number: WO 2024/207894

(57) **Abstract**

The present disclosure discloses an information processing method, device and readable storage medium, relating to the field of communication technologies, to realize power saving while ensuring service transmission. The method includes: obtaining first information, wherein the first information comprises information about a first DRX cycle and information about a second DRX cycle; and performing a DRX operation according to the first information.

## Description

### CROSS-REFERENCE TO RELATED APPLICATION

This disclosure claims priority to the Chinese Patent Application No. 202310367880.5 filed with the China Patent Office on April 7, 2023, entitled "INFORMATION PROCESSING METHOD, DEVICE AND READABLE STORAGE MEDIUM", the entire content of which is incorporated herein by reference.

### TECHNICAL FIELD

The present disclosure relates to the field of communication technologies, and in particular, to an information processing method, device and readable storage medium.

### BACKGROUND

Extended Reality (XR) includes Augmented Reality (AR), Mixed Reality (MR) and Virtual Reality (VR), etc.

XR services are modeled based on data frames (also known as data bursts, or simply bursts). For example, each data frame may correspond to an XR video frame. The same frame may be divided into one or more packet data unit sets (PDU sets), and a PDU set includes multiple packet data units (PDUs). In XR services, data bursts arrive periodically. Each data burst includes multiple PDU sets. There is a time interval between PDU sets to prevent PDUs from different PDU sets from being confused.

Discontinuous Reception (DRX) refers to a discontinuous reception mechanism for a terminal in a connected state. Under the DRX mechanism, the terminal periodically enters a sleep state and does not monitor physical downlink control channel (PDCCH) subframes. When it is necessary to monitor the PDCCH, the terminal wakes up from the sleep state, so that the terminal may achieve the purpose of power saving.

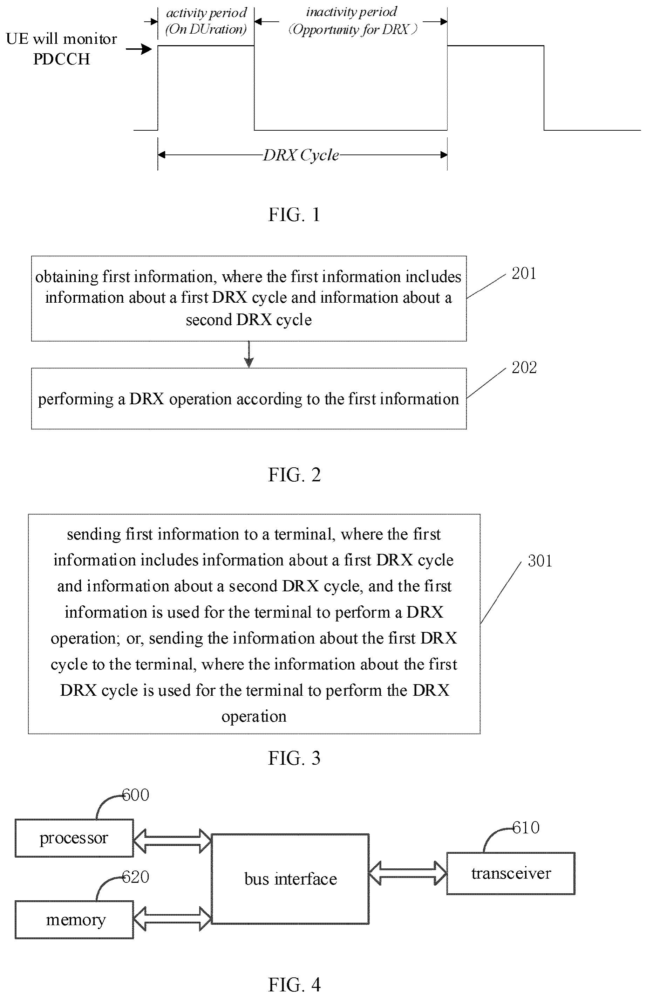

The DRX mechanism in the connected state is shown in FIG. 1: the period marked as "On Duration"(activity period) is the time when the terminal monitors the downlink PDCCH subframe at a start point of a DRX cycle, and the terminal is in the awake state. If no other timer is started during the period marked as "Opportunity for DRX"(inactivity period), it is the DRX sleep time, that is, the terminal enters the sleep state and does not monitor the PDCCH subframe in order to save power.

However, in the process of implementing the present disclosure, the inventor discovers that the DRX mechanism of the related art cannot well match service characteristics, thereby affecting transmission of service data.

### SUMMARY

Embodiments of the present disclosure provide an information processing method, device and readable storage medium to realize power saving while ensuring service transmission.

In a first aspect, an embodiment of the present disclosure provides an information processing method, applied to a terminal, comprising:
obtaining first information, wherein the first information comprises information about a first discontinuous reception cycle (DRX cycle) and information about a second DRX cycle;
performing a DRX operation according to the first information.

A length of the second DRX cycle is unrelated to a length of the first DRX cycle.

In some embodiments, the first DRX cycle matches a cycle of a data burst of XR service data, and the second DRX cycle matches a cycle of a packet data unit set (PDU set) of the XR service data.

In some embodiments, the obtaining first information comprises:
obtaining the information about the first DRX cycle and the information about the second DRX cycle from a network device; or
obtaining the information about the first DRX cycle from the network device;
wherein the information about the first DRX cycle comprises one or more of a cycle length, a cycle start point, and number of cycles of the first DRX cycle, and/or the information about the second DRX cycle comprises one or more of a cycle length, a cycle start point, and number of cycles of the second DRX cycle.

In some embodiments, the method further comprises:
obtaining second information from the network device, wherein the second information is used to indicate that the terminal is allowed to trigger the second DRX cycle, and/or the second information is used to instruct the terminal to send third information to the network device, wherein the third information comprises information about the second DRX cycle.

In some embodiments, the performing a DRX operation according to the first information comprises one or more of the following:
for a first data burst, activating the first DRX cycle according to the information about the first DRX cycle;
when time of entering a DRX active state of the first DRX cycle meets a first condition, performing a DRX operation of the second DRX cycle according to data buffering and transmission status of a first PDU set in the first data burst;
when transmission of the first data burst is completed, the terminal entering a DRX inactive state until a cycle start point of a next first DRX cycle.

In some embodiments, the activating the first DRX cycle comprises one or more of the following manners:
receiving a first instruction sent by a network device, wherein the first instruction is used to instruct the terminal to enter a DRX inactive state and activate the first DRX cycle; the terminal entering the DRX inactive state and activating the first DRX cycle according to the first instruction;
if it is determined that a uplink data packet currently sent is the last packet data unit (PDU) of the first data burst, after determining that the uplink data packet is sent or determining that the uplink data packet is sent successfully, the terminal entering the DRX inactive state and activating the first DRX cycle.

In some embodiments, the performing a DRX operation of the second DRX cycle according to data buffering and transmission status of a first PDU set comprises one or more of the following:
receiving a second instruction sent by a network device, wherein the second instruction is used to instruct the terminal to enter a DRX inactive state and activate the second DRX cycle; the terminal entering the DRX inactive state and activating the second DRX cycle according to the second instruction;
activating the second DRX cycle based on a DRX timer;
if it is determined that a uplink data packet currently sent is the last PDU of the first PDU set, after determining that the uplink data packet is sent or determining that the uplink data packet is sent successfully, the terminal entering the DRX inactive state and activating the second DRX cycle.

In some embodiments, the method further comprises:
sending a third instruction to the network device, wherein the third instruction is used to indicate that the terminal activates the first DRX cycle.

In some embodiments, the method further comprises one or more of the following:
sending a fourth instruction to the network device, wherein the fourth instruction is used to indicate that the terminal activates the second DRX cycle;
sending fourth information to the network device, wherein the fourth information comprises one or more of a cycle start point, number of cycles, and a cycle length of the second DRX cycle.

In some embodiments, the method further comprises:
receiving a fifth instruction sent by the network device, wherein the fifth instruction is used to indicate a way for the terminal to activate the first DRX cycle and/or a way for the terminal to activate the second DRX cycle.

In a second aspect, an embodiment of the present disclosure provides an information processing method, applied to a network device, comprising:
sending first information to a terminal, wherein the first information comprises information about a first DRX cycle and information about a second DRX cycle, and the first information is used for the terminal to perform a DRX operation; or
sending the information about the first DRX cycle to the terminal, wherein the information about the first DRX cycle is used for the terminal to perform the DRX operation.

In some embodiments, the method further comprises:
sending the first information and second information to the terminal, and determining the information about the second DRX cycle based on the second information, wherein the first information comprises the information about the first DRX cycle, the second information is used to indicate that the terminal is allowed to trigger the second DRX cycle, and/or, the second information is used to instruct the terminal to send third information to the network device, wherein the third information comprises information about the second DRX cycle.

A length of the second DRX cycle is unrelated to a length of the first DRX cycle.

In some embodiments, the first DRX cycle matches a cycle of a data burst of XR service data, and the second DRX cycle matches a cycle of a PDU set of the XR service data.

In some embodiments, the method further comprises one or more of the following:
sending a first instruction to the terminal, wherein the first instruction is used to instruct the terminal to enter a DRX inactive state and activate the first DRX cycle;
sending a second instruction to the terminal, wherein the second instruction is used to instruct the terminal to enter the DRX inactive state and activate the second DRX cycle.

In some embodiments, the method further comprises:
receiving a third instruction sent by the terminal, wherein the third instruction is used to indicate that the terminal activates the first DRX cycle;
activating the first DRX cycle according to the third instruction.

In some embodiments, the method further comprises:
receiving a fourth instruction sent by the terminal, wherein the fourth instruction is used to indicate that the terminal activates the second DRX cycle;
activating the second DRX cycle according to the fourth instruction.

In some embodiments, the method further comprises:
receiving fifth information sent by the terminal, wherein the fifth information comprises a cycle start point of the second DRX cycle and/or number of activating the second DRX cycle;
the activating the second DRX cycle according to the fourth instruction comprises:
   activating the second DRX cycle according to the fourth instruction and the fifth information.

In some embodiments, the method further comprises:
sending a fifth instruction to the terminal, wherein the fifth instruction is used to indicate a way for the terminal to activate the first DRX cycle and/or a way for the terminal to activate the second DRX cycle.

In a third aspect, an embodiment of the present disclosure provides an information processing device, applied to a terminal, comprising: a memory, a transceiver, and a processor:
wherein the memory is configured to store a computer program; the transceiver is configured to transmit and receive data under the control of the processor; and the processor is configured to read the computer program in the memory and perform following operations:
obtaining first information, wherein the first information comprises information about a first DRX cycle and information about a second DRX cycle;
performing a DRX operation according to the first information.

A length of the second DRX cycle is unrelated to a length of the first DRX cycle.

In some embodiments, the first DRX cycle matches a cycle of a data burst of XR service data, and the second DRX cycle matches a cycle of a PDU set of the XR service data.

In some embodiments, the processor is further configured to read the computer program in the memory and perform following operations:
obtaining the information about the first DRX cycle and the information about the second DRX cycle from a network device; or
obtaining the information about the first DRX cycle from the network device;
wherein the information about the first DRX cycle comprises one or more of a cycle length, a cycle start point, and number of cycles of the first DRX cycle, and/or the information about the second DRX cycle comprises one or more of a cycle length, a cycle start point, and number of cycles of the second DRX cycle.

In some embodiments, the processor is further configured to read the computer program in the memory and perform following operations:
obtaining second information from the network device, wherein the second information is used to indicate that the terminal is allowed to trigger the second DRX cycle, and/or the second information is used to instruct the terminal to send third information to the network device, wherein the third information comprises information about the second DRX cycle.

In some embodiments, the processor is further configured to read the computer program in the memory and perform following operations:
for a first data burst, activating the first DRX cycle according to the information about the first DRX cycle;
when time of entering a DRX active state of the first DRX cycle meets a first condition, performing a DRX operation of the second DRX cycle according to data buffering and transmission status of a first PDU set in the first data burst;
when transmission of the first data burst is completed, entering a DRX inactive state until a cycle start point of a next first DRX cycle.

In some embodiments, the processor is further configured to read the computer program in the memory and perform following operations:
receiving a first instruction sent by a network device, wherein the first instruction is used to instruct the terminal to enter a DRX inactive state and activate the first DRX cycle; entering the DRX inactive state and activating the first DRX cycle according to the first instruction;
if it is determined that a uplink data packet currently sent is the last packet data unit (PDU) of the first data burst, after determining that the uplink data packet is sent or determining that the uplink data packet is sent successfully, entering the DRX inactive state and activating the first DRX cycle.

In some embodiments, the processor is further configured to read the computer program in the memory and perform following operations:
receiving a second instruction sent by a network device, wherein the second instruction is used to instruct the terminal to enter a DRX inactive state and activate the second DRX cycle; entering the DRX inactive state and activating the second DRX cycle according to the second instruction;
activating the second DRX cycle based on a DRX timer;
if it is determined that a uplink data packet currently sent is the last PDU of the first PDU set, after determining that the uplink data packet is sent or determining that the uplink data packet is sent successfully, entering the DRX inactive state and activating the second DRX cycle.

In some embodiments, the processor is further configured to read the computer program in the memory and perform following operations:
sending a third instruction to the network device, wherein the third instruction is used to indicate that the terminal activates the first DRX cycle.

In some embodiments, the processor is further configured to read the computer program in the memory and perform one or more of the following operations:
sending a fourth instruction to the network device, wherein the fourth instruction is used to indicate that the terminal activates the second DRX cycle;
sending fourth information to the network device, wherein the fourth information comprises one or more of a cycle start point, number of cycles, and a cycle length of the second DRX cycle.

In some embodiments, the processor is further configured to read the computer program in the memory and perform following operations:
receiving a fifth instruction sent by the network device, wherein the fifth instruction is used to indicate a way for the terminal to activate the first DRX cycle and/or a way for the terminal to activate the second DRX cycle.

In a fourth aspect, an embodiment of the present disclosure provides an information processing device, applied to a network device, comprising: a memory, a transceiver, and a processor:
wherein the memory is configured to store a computer program; the transceiver is configured to transmit and receive data under the control of the processor; and the processor is configured to read the computer program in the memory and perform following operations:
sending first information to a terminal, wherein the first information comprises information about a first DRX cycle and information about a second DRX cycle, and the first information is used for the terminal to perform a DRX operation; or
sending the information about the first DRX cycle to the terminal, wherein the information about the first DRX cycle is used for the terminal to perform the DRX operation.

In some embodiments, the processor is further configured to read the computer program in the memory and perform following operations:
sending the first information and second information to the terminal, and determining the information about the second DRX cycle based on the second information, wherein the first information comprises the information about the first DRX cycle, the second information is used to indicate that the terminal is allowed to trigger the second DRX cycle, and/or, the second information is used to instruct the terminal to send third information to the network device, wherein the third information comprises information about the second DRX cycle.

A length of the second DRX cycle is unrelated to a length of the first DRX cycle.

In some embodiments, the first DRX cycle matches a cycle of a data burst of XR service data, and the second DRX cycle matches a cycle of a PDU set of the XR service data.

In some embodiments, the processor is further configured to read the computer program in the memory and perform one or more of the following operations:
sending a first instruction to the terminal, wherein the first instruction is used to instruct the terminal to enter a DRX inactive state and activate the first DRX cycle;
sending a second instruction to the terminal, wherein the second instruction is used to instruct the terminal to enter the DRX inactive state and activate the second DRX cycle.

In some embodiments, the processor is further configured to read the computer program in the memory and perform following operations:
receiving a third instruction sent by the terminal, wherein the third instruction is used to indicate that the terminal activates the first DRX cycle;
activating the first DRX cycle according to the third instruction.

In some embodiments, the processor is further configured to read the computer program in the memory and perform following operations:
receiving a fourth instruction sent by the terminal, wherein the fourth instruction is used to indicate that the terminal activates the second DRX cycle;
activating the second DRX cycle according to the fourth instruction.

In some embodiments, the processor is further configured to read the computer program in the memory and perform following operations:
receiving fifth information sent by the terminal, wherein the fifth information comprises a cycle start point of the second DRX cycle and/or number of activating the second DRX cycle;
activating the second DRX cycle according to the fourth instruction and the fifth information.

In some embodiments, the processor is further configured to read the computer program in the memory and perform following operations:
sending a fifth instruction to the terminal, wherein the fifth instruction is used to indicate a way for the terminal to activate the first DRX cycle and/or a way for the terminal to activate the second DRX cycle.

In a fifth aspect, an embodiment of the present disclosure provides an information processing device, applied to a terminal, comprising:
a first obtaining unit, configured to obtain first information, wherein the first information comprises information about a first DRX cycle and information about a second DRX cycle;
a first processing unit, configured to perform a DRX operation according to the first information.

A length of the second DRX cycle is unrelated to a length of the first DRX cycle.

In a sixth aspect, an embodiment of the present disclosure provides an information processing device, applied to a network device, comprising:
a first sending unit, configured to send first information to a terminal, wherein the first information comprises information about a first DRX cycle and information about a second DRX cycle, and the first information is used for the terminal to perform a DRX operation; or send the information about the first DRX cycle to the terminal, wherein the information about the first DRX cycle is used for the terminal to perform the DRX operation.

In a seventh aspect, an embodiment of the present disclosure further provides a processor-readable storage medium, on which a computer program is stored. When the computer program is executed by a processor, the steps in the information processing method described above are implemented.

In embodiments of the present disclosure, a terminal performs a DRX operation according to received first information, where the first information includes information about a first DRX cycle and information about a second DRX cycle. Therefore, by utilizing the solution of the embodiments of the present disclosure, corresponding DRC operations may be performed according to lengths of the second DRX cycle and the first DRX cycle that are set flexibly, thereby realizing power saving while ensuring service transmission.

### BRIEF DESCRIPTION OF THE DRAWINGS

FIG. 1 is a schematic diagram of the DRX mechanism;
FIG. 2 is a first flowchart of an information processing method provided by an embodiment of the present disclosure;
FIG. 3 is a second flowchart of an information processing method provided by an embodiment of the present disclosure;
FIG. 4 is a first structural diagram of an information processing device provided by an embodiment of the present disclosure;
FIG. 5 is a second structural diagram of an information processing device provided by an embodiment of the present disclosure.
FIG. 6 is a third structural diagram of an information processing device provided by an embodiment of the present disclosure;
FIG. 7 is a fourth structural diagram of an information processing device provided by an embodiment of the present disclosure.

### DETAILED DESCRIPTION

In embodiments of the present disclosure, the term "and/or" describes an association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

In embodiments of the present disclosure, the term "multiple (a plurality of)" refers to two or more than two, and other quantifiers are similar thereto.

The technical solutions in the embodiments of the present disclosure will be clearly and completely described below in conjunction with the drawings in the embodiments of the present disclosure. Obviously, the described embodiments are only part of the embodiments of the present disclosure, not all of the embodiments. Based on the embodiments of the present disclosure, all other embodiments obtained by those skilled in the art without creative work shall fall within the scope of protection of the present disclosure.

The embodiments of the present disclosure provide an information processing method and device, to realize power saving while ensuring service transmission.

The method and the device are based on the same application concept. Since the principles of solving problems by the method and the device are similar, the implementation of the device and the method can refer to each other, and the repeated parts will not be repeated.

Referring to FIG. 2, FIG. 2 is a flowchart of an information processing method provided by an embodiment of the present disclosure, which is applied to a terminal and includes following steps as shown in FIG. 2:
Step 201: obtaining first information, where the first information includes information about a first DRX cycle and information about a second DRX cycle.

The information about the first DRX cycle may include one or more of a cycle length, a cycle start point, and number of cycles of the first DRX cycle. The information about the second DRX cycle may include one or more of a cycle length, a cycle start point, and number of cycles of the second DRX cycle.

In the embodiment of the present disclosure, the first DRX cycle matches a cycle of a data burst of XR service data, and the second DRX cycle matches a cycle of a PDU set of the XR service data. Here, that the first DRX cycle matches a cycle of a data burst of XR service data may be understood as that the cycle length of the first DRX cycle is equal to the cycle of the data burst; at the same time, the lengths of other timers may ensure that the terminal is in the DRX active state during the time period for transmitting the data burst. Alternatively, that the second DRX cycle matches a cycle of a PDU set of the XR service data may be understood as that the cycle length of the second DRX cycle is equal to the cycle of the PDU set; at the same time, the lengths of other timers may ensure that the terminal is in the DRX active state during the time period for transmitting the PDU set.

The first DRX cycle may also be called a long DRX cycle, and the second DRX cycle may also be called a short DRX cycle.

In this step, the terminal may obtain the first information in following manners:
Manner 1: the terminal obtains the information about the first DRX cycle and the information about the second DRX cycle from a network device. The information about the first DRX cycle includes one or more of a cycle length, a cycle start point, and number of cycles of the first DRX cycle, and/or the information about the second DRX cycle includes one or more of a cycle length, a cycle start point, and number of cycles of the second DRX cycle.

That is, in this manner, obtaining the information about the first DRX cycle and the information about the second DRX cycle may be configured by the network device.

Manner 2: the terminal obtains the information about the first DRX cycle from the network device. In some embodiments, the terminal may also receive second information sent by the network device, where the second information is used to indicate that the terminal is allowed to trigger the second DRX cycle, and/or the second information is used to instruct the terminal to send third information to the network device, where the third information includes information about the second DRX cycle. For example, the network device may determine the information about the first DRX cycle based on downlink XR service data transmission.

In this manner, the terminal obtains the information about the first DRX cycle from the network device and determines the information about the second DRX cycle. At the same time, the terminal may also send third information to the network device to indicate the information about the second DRX cycle to the network device. That is, the information about the second DRX cycle is determined by the terminal and notified to the network device. Here, the manner in which the terminal determines the information about the second DRX cycle is not limited. For example, the terminal may determine the information about the second DRX cycle based on uplink XR service data transmission.

In the embodiment of the present disclosure, the first information is obtained in different ways, which improves the flexibility of obtaining the first information.

Step 202: performing a DRX operation according to the first information.

A length of the second DRX cycle is unrelated to a length of the first DRX cycle.

The meaning of "unrelated" may be understood as that there is no correlation between the length of the second DRX cycle and the length of the first DRX cycle, that is, the lengths of these two are set independently; and in some embodiments, the lengths of these two may be flexibly set as needed.

In this step, the terminal performs a DRX operation according to the first information, i.e., activates the first DRX cycle or the second DRX cycle, thereby entering a DRX active state or a DRX inactive state according to a periodic state of the PDU set or data burst.

Specifically, for a first data burst, the first DRX cycle is activated according to the information about the first DRX cycle. The first data burst may be any data burst. For example, the terminal may activate the first DRX cycle according to the cycle start point and cycle length of the first DRX cycle.

For example, assuming that the cycle length of the first DRX cycle is P1 and the cycle start point of the first DRX cycle is start point, when time T1 satisfies T mod P1=start point, T1 is the start time of a DRX cycle, so that the terminal enters the DRX active state.

Specifically, the terminal may activate the first DRX cycle in one or more of the following manners:
Manner 1: the terminal receives a first instruction from a network device, where the first instruction is used to instruct the terminal to enter a DRX inactive state and activate the first DRX cycle. The terminal may enter the DRX inactive state and activate the first DRX cycle according to the first instruction.
Manner 2: when it is determined that a uplink data packet currently sent is the last PDU of the first data burst, the terminal may enter the DRX inactive state and activate the first DRX cycle after sending the uplink data packet or determining that the uplink data packet is sent successfully (for example, feedback from the network device is received for the uplink data packet). That is, in this manner, the terminal determines when to activate the first DRX cycle according to transmission status of the uplink data packet. In this case, the terminal may send a third instruction to the network device, where the third instruction is used to indicate that the terminal activates the first DRX cycle.

When time of entering a DRX active state of the first DRX cycle meets a first condition, the terminal performs a DRX operation of the second DRX cycle according to data buffering and transmission status of a first PDU set in the first data burst. For example, after a PDU set ends, the terminal may perform a DRX operation of the second DRX cycle according to data buffering and transmission status of a first PDU set in the first data burst.

The data buffering and transmission status of the first PDU set may include number of PDUs in the first PDU set, the transmission status, whether the current PDU is the last PDU in the PDU set, and the like.

Specifically, the terminal may perform the DRX operation of the second DRX cycle in one or more of the following manners:
Manner 1: the terminal receives a second instruction sent by a network device, where the second instruction is used to instruct the terminal to enter a DRX inactive state and activate the second DRX cycle. The terminal may enter the DRX inactive state and activate the second DRX cycle according to the second instruction.
Manner 2: activating the second DRX cycle based on a DRX timer.

The DRX timer may include drx-onDurationTimer (DRX duration timer), drx-InactivityTimer (DRX inactivity timer), drx-RetransmissionTimerDL (DRX downlink retransmission timer) and drx-RetransmissionTimerUL (DRX uplink retransmission timer), etc. During the running of the above timers, the terminal is in the DRX active state.

Manner 3: when it is determined that a uplink data packet currently sent is the last PDU of the first PDU set, after sending the uplink data packet or determining that the uplink data packet is sent successfully (for example, feedback from the network device is received for the uplink data packet), entering the DRX inactive state and activating the second DRX cycle.

In this case, the terminal may send a fourth instruction to the network device, where the fourth instruction is used to indicate that the terminal activates the second DRX cycle. And/or, the terminal may further send fourth information to the network device, where the fourth information includes one or more of a cycle start point, number of cycles, and a cycle length of the second DRX cycle.

Regarding which of the above manners is used to activate the first DRX cycle or the second DRX cycle, the terminal may receive a fifth instruction sent by the network device, where the fifth instruction is used to indicate a way for the terminal to activate the first DRX cycle and/or a way for the terminal to activate the second DRX cycle.

In embodiments of the present disclosure, a terminal performs a DRX operation according to received first information, where the first information includes information about a first DRX cycle and information about a second DRX cycle. Therefore, by utilizing the solution of the embodiments of the present disclosure, corresponding design rule check (DRC) operations may be performed according to lengths of the second DRX cycle and the first DRX cycle that are set flexibly, thereby realizing power saving while ensuring service transmission.

Referring to FIG. 3, FIG. 3 is a flowchart of an information processing method provided by an embodiment of the present disclosure, which is applied to a network device. As shown in FIG. 3, the following steps are included:
Step 301: sending first information to a terminal, where the first information includes information about a first DRX cycle and information about a second DRX cycle, and the first information is used for the terminal to perform a DRX operation; or, sending the information about the first DRX cycle to the terminal, where the information about the first DRX cycle is used for the terminal to perform the DRX operation.

In some embodiments, the network device may also send second information to the terminal, where the second information is used to indicate that the terminal is allowed to trigger the second DRX cycle, and/or, the second information is used to instruct the terminal to send third information to the network device, where the third information includes information about the second DRX cycle.

A length of the second DRX cycle is unrelated to a length of the first DRX cycle.

The first DRX cycle matches a cycle of a data burst of XR service data, and the second DRX cycle matches a cycle of a PDU set of the XR service data. The specific meaning of matching may be found in the description of the aforementioned method embodiment.

In some embodiments, in the embodiments of the present disclosure, the network device may instruct the terminal to activate the first DRX cycle or the second DRX cycle to better match the transmission of the service.

For example, the network device may further send a first instruction to the terminal, where the first instruction is used to instruct the terminal to enter a DRX inactive state and activate the first DRX cycle. For example, the network device may send the first instruction to the terminal according to the arrival status of the downlink XR data.

For example, the network device may further send a second instruction to the terminal, where the second instruction is used to instruct the terminal to enter the DRX inactive state and activate the second DRX cycle. For example, the network device may send the first instruction to the terminal according to the arrival status of the downlink XR data.

Regarding the manner in which the terminal activates the first DRX cycle or the second DRX cycle, the network device may send a fifth instruction to the terminal, where the fifth instruction is used to indicate a way for the terminal to activate the first DRX cycle and/or a way for the terminal to activate the second DRX cycle.

In some embodiments, in the embodiments of the present disclosure, the network device may activate the first DRX cycle or the second DRX cycle according to the instruction of the terminal, so as to better match the transmission of the service.

For example, the network device may further receive a third instruction sent by the terminal, where the third instruction is used to indicate that the terminal activates the first DRX cycle; and activate the first DRX cycle according to the third instruction.

For example, the network device may further receive a fourth instruction sent by the terminal, where the fourth instruction is used to indicate that the terminal activates the second DRX cycle; and activate the second DRX cycle according to the fourth instruction. In this case, in order for the network device to accurately activate the second DRX cycle, the network device may further receive fifth information sent by the terminal, and activate the second DRX cycle according to the fourth instruction and the fifth information. The fifth information includes a cycle start point of the second DRX cycle and/or number of activating the second DRX cycle.

In some embodiments, the network device may further determine whether to activate the first DRX cycle or the second DRX cycle based on monitoring of the timer.

In embodiments of the present disclosure, a terminal performs a DRX operation according to received first information, where the first information includes information about a first DRX cycle and information about a second DRX cycle. Therefore, by utilizing the solution of the embodiments of the present disclosure, corresponding DRC operations may be performed according to lengths of the second DRX cycle and the first DRX cycle that are set flexibly, thereby realizing power saving while ensuring service transmission.

The following describes the implementation process of the embodiments of the present disclosure in combination with different embodiments. In the following embodiments, a base station is used as an example to describe the network device.

In an embodiment, a base station configures a DRX cycle according to a downlink XR service. For the base station side, the following process may be included:
Step 401: the base station receiving XR service Quality of Service (QoS) configuration sent by a core network, and configuring, for the terminal based on a cycle of the downlink XR service and an interval of PDU sets, long DRX configuration and short DRX configuration, of which cycle values correspond to a data burst cycle and a PDU set interval cycle, respectively.
Step 402: starting from a start point of the long DRX cycle (i.e., the first DRX cycle), determining that the terminal enters the DRX active state, performing data scheduling and transmission on the terminal, and determining whether the terminal is in the active state or the inactive state based on uplink and downlink transmission and the running state of the configured DRX timer.
Step 403: running the DRX timer; activating the short DRX cycle (i.e., the second DRX cycle) if the DRX inactive state is entered based on the DRX timer.
Step 404: if the short DRX cycle is not entered in step 403, determining that no uplink data transmission needs to be scheduled, and sending an instruction of entering the short DRX cycle when sending the last PDU of the PDU set to the terminal. The base station may determine whether it is the last PDU of the PDU set according to a PDU set end identifier carried in a GPRS Tunneling Protocol-U (GTP-U) header of the data packet by the core network.

The instruction may be specifically carried by a DRX Media Access Control (MAC) Control Element (CE). The DRX MAC CE may be organized into a MAC PDU together with the last PDU of the PDU set and sent to the terminal together, or may be sent to the terminal separately. After sending the instruction or determining that the instruction is sent successfully, it is determined that the terminal enters the inactive state and activates the short DRX cycle.

Step 405: calculating a start point of a next short DRX cycle according to configuration of the length and the start point of the short DRX cycle, entering the DRX active state, and repeating steps 403-404.

When it is determined that no uplink data transmission needs to be scheduled, an instruction of entering a long DRX cycle is sent when the last PDU of the current data burst is sent to the terminal. The base station may determine the last PDU of the current data burst based on a data burst end identifier sent by the core network.

The instruction of entering the long DRX cycle may be a long DRX MAC CE, which may be sent to the terminal together with the last PDU of the data burst, or may be sent to the terminal separately. After the instruction is sent or it is determined that the instruction is sent successfully, the terminal is considered to enter an inactive state and activate the long DRX cycle.

On the terminal side, the specific processing process may include:
Step 401a: receiving long DRX configuration and short DRX configuration configured by the base station. The cycle lengths of these two sets of DRX configuration are different.
Step 402a: calculating a start point of a next long DRX cycle according to configuration of the cycle and the start point of the long DRX cycle. For example, the DRX cycle value is P, the first cycle start point is start point, and when time T satisfies T mod P=start point, T is the start time of a cycle. The terminal enters the DRX active state at the start point of the long DRX cycle, receives base station scheduling, and performs uplink and downlink data transmission. It is determined whether the terminal is in an active state or an inactive state based on uplink and downlink data transmission and the running state of the related DRX timer.
Step 403a: running the DRX timer; activating a short DRX cycle if the terminal is determined to enter the inactive state based on the DRX timer.
Step 404a: if the terminal does not enter the short DRX cycle in step 403a, receiving an instruction of entering the short DRX cycle sent by the base station side. Specifically, the instruction may be carried by a DRX MAC CE. The DRX MAC CE may be transmitted in a MAC PDU together with the last PDU of the PDU set, or may be transmitted separately. When the terminal receives the instruction information about entering the short DRX cycle, the terminal enters the inactive state and activates the short DRX cycle.
Step 405a: calculating a start point of a next short DRX cycle according to configuration of the length and the start point of the short DRX cycle. For example, the short DRX cycle value is P1, the first cycle start point is start point, and when time T1 satisfies T mod P1=start point, T1 is the start time of a short DRX cycle. The DRX active state is entered at the start point of the next short DRX cycle, and steps 403a-404a are repeated until an instruction of entering a long DRX cycle is received from the base station. The instruction may be carried by a Long DRX MAC CE. After receiving the instruction information, the terminal enters the inactive state and activates the long DRX cycle.

In an embodiment, the base station configures a DRX cycle according to an uplink XR service. The processing process on the base station side may include:
Step 501: receiving XR service QoS configuration sent by a core network, and configuring long DRX configuration and short DRX configuration for the terminal based on the cycle of the uplink XR service. A cycle length of the long DRX cycle (i.e., the first DRX cycle) corresponds to a data burst cycle. The base station determines a cycle length of the short DRX cycle (i.e., the second DRX cycle) by using one of the following methods:
   1) configuring a short DRX cycle based on a PDU set interval cycle indicated by the core network;
   2) configuring the terminal to indicate information about the short DRX cycle, or indicating that the terminal is allowed to trigger the short DRX cycle. For example, the base station sends an instruction to the terminal, instructing the terminal to report the cycle length, the cycle start point, etc. of the short DRX cycle, such as the start point of the next short DRX cycle.
Step 502: starting from a start point of the long DRX cycle, considering that the terminal enters the DRX active state, performing data scheduling and transmission on the terminal, and determining whether the terminal is in the active state or the inactive state based on uplink and downlink transmission and the running state of the configured DRX timer.
Step 503: running the DRX timer; activating the short DRX cycle if the terminal is determined to enter the inactive state based on the DRX timer.
Step 504: entering the short DRX cycle in any of the following manners if the short DRX cycle is not entered in step 503:
   1) when it is determined that there is no data scheduling and transmission, sending an instruction of entering the short DRX cycle to the terminal, which may be carried by the DRX MAC CE; after sending the instruction or determining that the instruction is sent successfully, determining that the terminal enters the inactive state and activates the short DRX cycle.
   2) receiving an instruction of entering the short DRX cycle sent by the terminal side, determining that the terminal enters the inactive state and activates the short DRX cycle.

In some embodiments, the terminal also sends start point information about a next short DRX cycle, such as a time offset value of the next short DRX cycle;
In some embodiments, the terminal further indicates the number of short DRX cycles, that is, how many short DRX cycles are run before entering the long DRX cycle.

The base station may activate a short DRX cycle based on the above information.

Step 505: entering the DRX active state at the start point of the next short DRX cycle, repeating steps 503-5044, and entering the long DRX cycle in any of the following manners:
1) when determining that the last PDU of the data burst is received and there is no other data to be scheduled for transmission, sending an instruction of entering a long DRX cycle to the terminal; the instruction may be carried by the Long DRX MAC CE; after sending the instruction or determining that the instruction is sent successfully, determining that the terminal enters an inactive state and activates a long DRX cycle.
2) receiving an instruction of entering a long DRX cycle sent by the terminal side, determining that the terminal enters the inactive state and activates the long DRX cycle.

On the terminal side, the specific processing process may include:
Step 501a: receiving long DRX configuration and short DRX configuration configured by the base station side. The cycle lengths of these two sets of DRX configuration are different.
Step 502a: according to determination of the cycle and the start point of the long DRX cycle, entering the DRX active state at the start point of the long DRX cycle, receiving base station scheduling, and performing uplink and downlink data transmission. It is determined whether the terminal is in an active state or an inactive state based on the running state of the configured DRX timer;
Step 503a: running the DRX timer; activating a short DRX cycle if the terminal is determined to enter the inactive state based on the running state of the DRX timer.
Step 504a: the terminal entering the short DRX cycle by using any of the following manners if the short DRX cycle is not entered in step 503a:
   1) receiving an instruction of entering a short DRX cycle sent by the base station side; specifically, the instruction may be a DRX MAC CE, or may reuse a DRX MAC CE in related technologies; entering a DRX inactive state and activating a short DRX cycle.
   2) determining according to the uplink data to be sent; if a uplink data packet currently sent includes the last PDU of the PDU set, entering the inactive state and activating the short DRX cycle after sending the PDU or after the PDU is sent successfully. In some embodiments, the terminal may send to the base station an instruction message of entering the short DRX cycle.

In some embodiments, the terminal also sends start point information about a next short DRX cycle, such as a time offset value of the next short DRX;

In some embodiments, the terminal further indicates the number of short DRX cycles, that is, how many short DRX cycles are run before entering the long DRX cycle.

Step 505a: entering the DRX active state at the start point of the next short DRX cycle, repeating steps 503a-504a, and entering the long DRX cycle using any of the following manners:
1) receiving an instruction of entering the long DRX cycle sent by the base station side, which may be a Long DRX MAC CE, entering the inactive state, and activating the long DRX cycle;
2) when a PDU currently sent is the last PDU of a data burst, entering the inactive state and activating the long DRX cycle after sending the PDU or the PDU is sent successfully. In some embodiments, the terminal sends instruction information about entering a long DRX cycle to the base station.

It may be seen from the above description that, by utilizing the solution of the embodiments of the present disclosure, a terminal transmitting XR services can realize power saving while ensuring service transmission.

The technical solutions provided by the embodiments of the present disclosure may be applied to a variety of systems, especially 5G systems. For example, applicable systems may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems include terminal devices and network devices. The system may also include core network parts, such as the Evolved Packet System (EPS), 5G System (5GS), etc.

The terminal device involved in the embodiments of the present disclosure may be a device that provides voice and/or data connectivity to a user, a handheld device with a radio connection function, or other processing devices connected to a radio modem. In different systems, the name of the terminal device may also be different. For example, in the 5G system, the terminal device may be called User Equipment (UE). Radio terminal devices may communicate with one or more core networks (CN) via a radio access network (RAN). Radio terminal devices may be mobile terminal devices, such as mobile phones (or "cellular" phones) and computers with mobile terminal devices, for example, portable, pocket-sized, handheld, computer-built-in or vehicle-mounted mobile devices, which exchange language and/or data with the radio access network. For example, Personal Communication Service (PCS) phones, cordless phones, Session Initiated Protocol (SIP) phones, Wireless Local Loop (WLL) stations, Personal Digital Assistant (PDA), etc. The radio terminal device may also be referred to as a system, a subscriber unit, a subscriber station, a mobile station, a mobile, a remote station, an access point, a remote terminal device, an access terminal device, a user terminal device, a user agent, or a user device, but is not limited in the embodiments of the present disclosure.

The network device involved in the embodiments of the present disclosure may be a base station, which may include multiple cells providing services for terminals. Depending on the specific application scenario, the base station may also be called an access point, or may be a device in an access network that communicates with radio terminal devices through one or more sectors on the air interface, or may be called another name. The network device may be used to convert received air frames into and out of Internet Protocol (IP) packets, acting as a router between the radio terminal device and the rest of the access network, which may include an Internet Protocol (IP) communications network. The network equipment also coordinates the management of attributes of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., but is not limited in the embodiments of the present disclosure. In some network structures, network devices may include centralized unit (CU) nodes and distributed unit (DU) nodes, and the centralized unit and the distributed unit may also be geographically separated.

Network devices and terminal devices may each use one or more antennas for Multiple Input Multiple Output (MIMO) transmission. MIMO transmission may be single user MIMO (SU-MIMO) or multiple user MIMO (MU-MIMO). Depending on the form and number of antenna combinations, MIMO transmission may be two-dimension MIMO (2D-MIMO), three-dimension MIMO (3D-MIMO), full dimension MIMO (FD-MIMO), or massive MIMO, or may also be diversity transmission, precoding transmission, or beamforming transmission, etc.

As shown in FIG. 4, an information processing device according to an embodiment of the present disclosure, applied to a network device, includes: a processor 600 configured to read a program in a memory 620 and perform the following process:
sending first information to a terminal, where the first information includes information about a first DRX cycle and information about a second DRX cycle, and the first information is used for the terminal to perform a DRX operation; or
sending the information about the first DRX cycle to the terminal, where the information about the first DRX cycle is used for the terminal to perform the DRX operation.

A transceiver 610 is configured to receive and transmit data under the control of the processor 600.

In FIG. 4, the bus architecture may include any number of interconnected buses and bridges, specifically linking various circuits of one or more processors represented by processor 600 and memory represented by memory 620 together. The bus architecture may also link together various other circuits such as peripheral devices, voltage regulators, and power management circuits, which are all well known in the art and, therefore, will not be described further herein. The bus interface provides an interface. The transceiver 610 may be a plurality of elements, i.e., including a transmitter and a receiver, providing a unit for communicating with various other devices over a transmission medium. The processor 600 is responsible for managing the bus architecture and general processing, and the memory 620 may store data used by the processor 600 when performing operations.

The processor 600 may be a central processing unit (CPU), an application specific integrated circuit (ASIC), a field programmable gate array (FPGA), or a complex programmable logic device (CPLD). The processor may also adopt a multi-core architecture.

The processor 600 is responsible for managing the bus architecture and general processing, and the memory 620 may store data used by the processor 600 when performing operations.

A length of the second DRX cycle is unrelated to a length of the first DRX cycle.

The first DRX cycle matches a cycle of a data burst of XR service data, and the second DRX cycle matches a cycle of a PDU set of the XR service data.

The processor 600 is further configured to read the program and perform one or more of the following steps:
sending second information to the terminal, where the second information is used to indicate that the terminal is allowed to trigger the second DRX cycle, and/or, the second information is used to instruct the terminal to send third information to the network device, where the third information includes information about the second DRX cycle.

The processor 600 is further configured to read the program and perform one or more of the following steps:
sending a first instruction to the terminal, where the first instruction is used to instruct the terminal to enter a DRX inactive state and activate the first DRX cycle;
sending a second instruction to the terminal, where the second instruction is used to instruct the terminal to enter the DRX inactive state and activate the second DRX cycle.

The processor 600 is further configured to read the program and perform following steps:
receiving a third instruction sent by the terminal, where the third instruction is used to indicate that the terminal activates the first DRX cycle;
activating the first DRX cycle according to the third instruction.

The processor 600 is further configured to read the program and perform following steps:
receiving a fourth instruction sent by the terminal, where the fourth instruction is used to indicate that the terminal activates the second DRX cycle;
activating the second DRX cycle according to the fourth instruction.

The processor 600 is further configured to read the program and perform following steps:
receiving fifth information sent by the terminal, where the fifth information includes a cycle start point of the second DRX cycle and/or number of activating the second DRX cycle;
activating the second DRX cycle according to the fourth instruction and the fifth information.

The processor 600 is further configured to read the program and perform following steps:
sending a fifth instruction to the terminal, where the fifth instruction is used to indicate a way for the terminal to activate the first DRX cycle and/or a way for the terminal to activate the second DRX cycle.

It should be noted here that the above-mentioned device provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

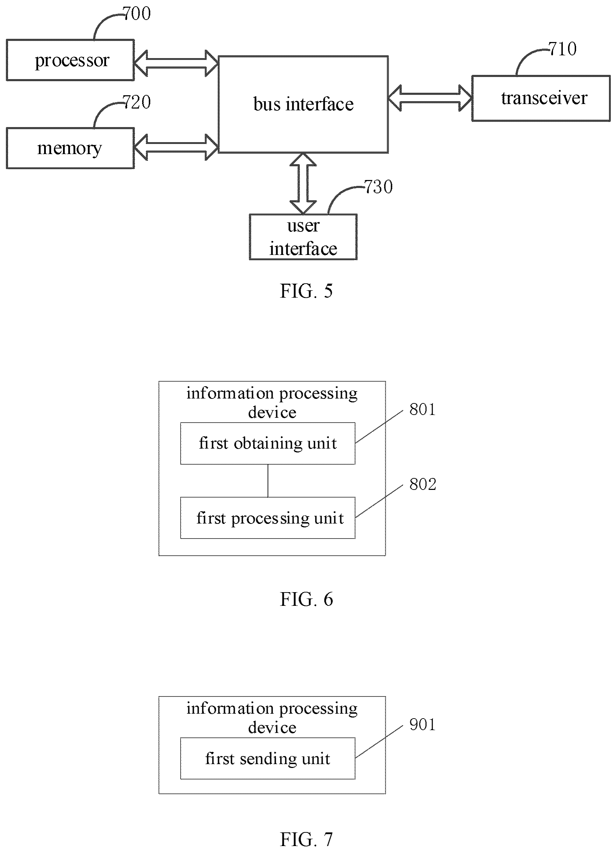

As shown in FIG. 5, an information processing device according to an embodiment of the present disclosure, applied to a terminal, includes: a processor 700 configured to read a program in a memory 720 and perform the following processes:
obtaining first information, where the first information includes information about a first DRX cycle and information about a second DRX cycle;
performing a DRX operation according to the first information.

The transceiver 710 is configured to receive and transmit data under the control of the processor 700.

In FIG. 5, the bus architecture may include any number of interconnected buses and bridges, specifically linking various circuits of one or more processors represented by processor 700 and memory represented by memory 720 together. The bus architecture may also link together various other circuits such as peripheral devices, voltage regulators, and power management circuits, which are all well known in the art and, therefore, will not be described further herein. The bus interface provides an interface. The transceiver 710 may be a plurality of elements, i.e., including a transmitter and a receiver, providing a unit for communicating with various other devices over a transmission medium. For different user devices, the user interface 730 may also be an interface capable of connecting to external or internal devices as required, and the connected devices include but are not limited to a keypad, a display, a speaker, a microphone, a joystick, and the like.

The processor 700 is responsible for managing the bus architecture and general processing, and the memory 720 may store data used by the processor 700 when performing operations.

The processor 700 may be a CPU, an ASIC, an FPGA, or a CPLD, and the processor may also adopt a multi-core architecture.

The processor calls the computer program stored in the memory to perform any of the methods provided in the embodiments of the present disclosure according to the obtained executable instructions. The processor and the memory may also be physically separated.

A length of the second DRX cycle is unrelated to a length of the first DRX cycle.

The first DRX cycle matches a cycle of a data burst of XR service data, and the second DRX cycle matches a cycle of a PDU set of the XR service data.

The processor 700 is further configured to read the program and perform following steps:
obtaining the information about the first DRX cycle and the information about the second DRX cycle from a network device; or
obtaining the first DRX cycle from the network device;
where the information about the first DRX cycle includes one or more of a cycle length, a cycle start point, and number of cycles of the first DRX cycle, and/or the information about the second DRX cycle includes one or more of a cycle length, a cycle start point, and number of cycles of the second DRX cycle.

The processor 700 is further configured to read the program and perform following steps:
obtaining second information from the network device, where the second information is used to indicate that the terminal is allowed to trigger the second DRX cycle, and/or the second information is used to instruct the terminal to send third information to the network device, where the third information includes information about the second DRX cycle.

The processor 700 is further configured to read the program and perform following steps:
for a first data burst, activating the first DRX cycle according to the information about the first DRX cycle;
when time of entering a DRX active state of the first DRX cycle meets a first condition, performing a DRX operation of the second DRX cycle according to data buffering and transmission status of a first PDU set in the first data burst;
when transmission of the first data burst is completed, entering a DRX inactive state until a cycle start point of a next first DRX cycle.

The processor 700 is further configured to read the program and perform following steps:
receiving a first instruction sent by a network device, where the first instruction is used to instruct the terminal to enter a DRX inactive state and activate the first DRX cycle; entering the DRX inactive state and activating the first DRX cycle according to the first instruction;
if it is determined that a uplink data packet currently sent is the last packet data unit (PDU) of the first data burst, after determining that the uplink data packet is sent or determining that the uplink data packet is sent successfully, entering the DRX inactive state and activating the first DRX cycle.

The processor 700 is further configured to read the program and perform following steps:
receiving a second instruction sent by a network device, where the second instruction is used to instruct the terminal to enter a DRX inactive state and activate the second DRX cycle; entering the DRX inactive state and activating the second DRX cycle according to the second instruction;
activating the second DRX cycle based on a DRX timer;
if it is determined that a uplink data packet currently sent is the last PDU of the first PDU set, after determining that the uplink data packet is sent or determining that the uplink data packet is sent successfully, entering the DRX inactive state and activating the second DRX cycle.

The processor 700 is further configured to read the program and perform following steps:
sending a third instruction to the network device, where the third instruction is used to indicate that the terminal activates the first DRX cycle.

The processor 700 is further configured to read the program and perform one or more of the following operations:
sending a fourth instruction to the network device, where the fourth instruction is used to indicate that the terminal activates the second DRX cycle;
sending fourth information to the network device, where the fourth information includes one or more of a cycle start point, number of cycles, and a cycle length of the second DRX cycle.

The processor 700 is further configured to read the program and perform following steps:
receiving a fifth instruction sent by the network device, where the fifth instruction is used to indicate a way for the terminal to activate the first DRX cycle and/or a way for the terminal to activate the second DRX cycle.

It should be noted here that the above-mentioned device provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

As shown in FIG. 6, an information processing device according to an embodiment of the present disclosure, applied to a terminal, includes:
a first obtaining unit 801, configured to obtain first information, where the first information includes information about a first DRX cycle and information about a second DRX cycle;
a first processing unit 802, configured to perform a DRX operation according to the first information.

A length of the second DRX cycle is unrelated to a length of the first DRX cycle.

The first DRX cycle matches a cycle of a data burst of XR service data, and the second DRX cycle matches a cycle of a PDU set of the XR service data.

In some embodiments, the first obtaining unit is configured to:
obtain the information about the first DRX cycle and the information about the second DRX cycle from a network device; or
obtain the information about the first DRX cycle from the network device;
where the information about the first DRX cycle includes one or more of a cycle length, a cycle start point, and number of cycles of the first DRX cycle, and/or the information about the second DRX cycle includes one or more of a cycle length, a cycle start point, and number of cycles of the second DRX cycle.

In some embodiments, the first obtaining unit is further configured to obtain second information from the network device, where the second information is used to indicate that the terminal is allowed to trigger the second DRX cycle, and/or the second information is used to instruct the terminal to send third information to the network device, where the third information includes information about the second DRX cycle.

In some embodiments, the first processing unit is configured to perform one or more of the following:
for a first data burst, activate the first DRX cycle according to the information about the first DRX cycle;
when time of entering a DRX active state of the first DRX cycle meets a first condition, perform a DRX operation of the second DRX cycle according to data buffering and transmission status of a first PDU set in the first data burst;
when transmission of the first data burst is completed, enter a DRX inactive state until a cycle start point of a next first DRX cycle.

In some embodiments, the first processing unit is configured to activate the first DRX cycle in one or more of the following manners:
receiving a first instruction sent by a network device, where the first instruction is used to instruct the terminal to enter a DRX inactive state and activate the first DRX cycle; entering the DRX inactive state and activating the first DRX cycle according to the first instruction;
if it is determined that a uplink data packet currently sent is the last packet data unit (PDU) of the first data burst, after determining that the uplink data packet is sent or determining that the uplink data packet is sent successfully, entering the DRX inactive state and activating the first DRX cycle.

In some embodiments, the first processing unit is configured to perform the DRX operation of the second DRX cycle in one or more of the following manners:
receiving a second instruction sent by a network device, where the second instruction is used to instruct the terminal to enter a DRX inactive state and activate the second DRX cycle; entering the DRX inactive state and activating the second DRX cycle according to the second instruction;
activating the second DRX cycle based on a DRX timer;
if it is determined that a uplink data packet currently sent is the last PDU of the first PDU set, after determining that the uplink data packet is sent or determining that the uplink data packet is sent successfully, entering the DRX inactive state and activating the second DRX cycle.

In some embodiments, the device may further comprise:
a first sending unit, configured to send a third instruction to the network device, where the third instruction is used to indicate that the terminal activates the first DRX cycle.

In some embodiments, the device may further include one or more of the following:
a second sending unit, configured to send a fourth instruction to the network device, where the fourth instruction is used to indicate that the terminal activates the second DRX cycle;
a third sending unit, configured to send fourth information to the network device, where the fourth information includes one or more of a cycle start point, number of cycles, and a cycle length of the second DRX cycle.

In some embodiments, the device may further include:
a first receiving unit, configured to receive a fifth instruction sent by the network device, where the fifth instruction is used to indicate a way for the terminal to activate the first DRX cycle and/or a way for the terminal to activate the second DRX cycle.

It should be noted here that the above-mentioned device provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

As shown in FIG. 7, an information processing device according to an embodiment of the present disclosure, applied to a network device, includes:
a first sending unit 901, configured to send first information to a terminal, where the first information includes information about a first DRX cycle and information about a second DRX cycle, and the first information is used for the terminal to perform a DRX operation; or, send the information about the first DRX cycle to the terminal, where the information about the first DRX cycle is used for the terminal to perform the DRX operation.

A length of the second DRX cycle is unrelated to a length of the first DRX cycle.

In some embodiments, the first DRX cycle matches a cycle of a data burst of XR service data, and the second DRX cycle matches a cycle of a PDU set of the XR service data.

In some embodiments, the first sending unit is further configured to send second information to the terminal, where the second information is used to indicate that the terminal is allowed to trigger the second DRX cycle, and/or, the second information is used to instruct the terminal to send third information to the network device, where the third information includes information about the second DRX cycle.

In some embodiments, the device may further include one or more of the following:
a second sending unit, configured to send a first instruction to the terminal, where the first instruction is used to instruct the terminal to enter a DRX inactive state and activate the first DRX cycle;
a third sending unit, configured to send a second instruction to the terminal, where the second instruction is used to instruct the terminal to enter the DRX inactive state and activate the second DRX cycle.

In some embodiments, the device may further include:
a first receiving unit, configured to receive a third instruction sent by the terminal, where the third instruction is used to indicate that the terminal activates the first DRX cycle;
a first processing unit, configured to activate the first DRX cycle according to the third instruction.

In some embodiments, the device may further include:
a second receiving unit, configured to receive a fourth instruction sent by the terminal, where the fourth instruction is used to indicate that the terminal activates the second DRX cycle;
a second processing unit, configured to activate the second DRX cycle according to the fourth instruction.

In some embodiments, the device may further include:
a third receiving unit, configured to receive fifth information sent by the terminal, where the fifth information includes a cycle start point of the second DRX cycle and/or number of activating the second DRX cycle;
where the second processing unit is further configured to activate the second DRX cycle according to the fourth instruction and the fifth information.

In some embodiments, the device may further include:
a fourth sending unit, configured to send a fifth instruction to the terminal, where the fifth instruction is used to indicate a way for the terminal to activate the first DRX cycle and/or a way for the terminal to activate the second DRX cycle.

It should be noted here that the above-mentioned device provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

It should be noted that the division of units in the embodiments of the present disclosure is schematic and is merely a logical function division. There may be other division methods in actual implementation. In addition, each functional unit in each embodiment of the present disclosure may be integrated into one processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it may be stored in a processor-readable storage medium. Based on this understanding, the technical solution of the present disclosure, or the part that contributes to the relevant technology, or all or part of the technical solution may be embodied in the form of a software product. The computer software product is stored in a storage medium and includes a number of instructions for causing a computer device (which may be a personal computer, a server, or a network device, etc.) or a processor to perform all or part of the steps of the method described in each embodiment of the present disclosure. The aforementioned storage medium includes: U disk, mobile hard disk, read-only memory (ROM), random access memory (RAM), magnetic disk or optical disk, etc., which may store program codes.

An embodiment of the present disclosure further provides a communication device, including: a memory, a processor, and a program stored in the memory and executable on the processor, where the processor implements the steps of the above-described information processing method when executing the program.

An embodiment of the present disclosure also provides a processor-readable storage medium, on which a program is stored. When the program is executed by the processor, the various processes of the above-mentioned information processing method embodiment are implemented and the same technical effects can be achieved. To avoid repetition, it will not be repeated here. The readable storage medium may be any available medium or data storage device that may be accessed by the processor, including but not limited to magnetic storage (such as floppy disks, hard disks, magnetic tapes, magneto-optical (MO), etc.), optical storage (such as compact disc (CD), high-density digital video disc (DVD), Blu-ray disc (BD), high-definition versatile disc (HVD), etc.), and semiconductor memory (such as ROM, erasable programmable read-only memory (EPROM), electrically erasable programmable read-only memory (EEPROM), non-volatile memory (NAND FLASH), solid state disk (SSD)), etc.

It should be noted that, in this disclosure, the terms "comprise", "include" or any other variations thereof are intended to cover non-exclusive inclusion, so that a process, method, article or device that includes a series of elements includes not only those elements, but also includes other elements not explicitly listed, or also includes elements that are inherent to such process, method, article or device. Without further constraints, an element defined by the phrase "comprise a..." does not exclude the existence of other identical elements in the process, method, article or device that includes the element.

Through the description of the above implementations, those skilled in the art may clearly understand that the above embodiment methods may be implemented by means of software plus the necessary general hardware platform, and of course may also be implemented by hardware, but in many cases the former is a better implementation. Based on this understanding, the technical solution of the present disclosure, or the part that contributes to the relevant technology, may be embodied in the form of a software product. The computer software product is stored in a storage medium (such as ROM/RAM, disk, CD-ROM), and includes a number of instructions for causing a terminal (which may be a mobile phone, a computer, a server, an air conditioner, or a network device, etc.) to perform the methods described in the various embodiments of the present disclosure.

It should be noted that it should be understood that the division of the above modules is merely a division of logical functions, and in actual implementation, they may be fully or partially integrated into one physical entity, or they may be physically separated. These modules may all be implemented in the form of software called by processing elements; they may also all be implemented in the form of hardware; or some modules may be implemented in the form of software called by processing elements, and some modules may be implemented in the form of hardware. For example, a determining module may be a separately established processing element, or may be integrated into a chip of the above-mentioned device. In addition, it may also be stored in the memory of the above-mentioned device in the form of program code, and called by a processing element of the above-mentioned device and perform the function of the above-mentioned determining module. The implementation of other modules is similar. In addition, all or part of these modules may be integrated together or implemented independently. The processing element mentioned here may be an integrated circuit having a signal processing capability. During implementation, each step of the above method or each module above may be completed by an integrated logic circuit of hardware in a processor element or by instructions in the form of software.

For example, each module, unit, sub-unit or sub-module may be one or more integrated circuits configured to implement the above method, such as: one or more application specific integrated circuits (ASICs), or, one or more microprocessors (digital signal processors, DSPs), or, one or more field programmable gate arrays (FPGAs), etc. For another example, when a certain module above is implemented in the form of a processing element scheduling a program code, the processing element may be a general-purpose processor, such as a central processing unit (CPU) or other processor that may call program codes. For another example, these modules may be integrated together and implemented in the form of a system-on-a-chip (SOC).

The terms "first", "second", and the like in the description and claims of the present disclosure are used to distinguish similar objects but not necessarily to describe a particular sequence or order. It should be understood that the terms so used are interchangeable under appropriate circumstances to cause the embodiments of the disclosure described herein to be practiced in sequences other than those illustrated or described herein. In addition, the use of "and/or" in the specification and claims indicates at least one of the connected objects, for example, A and/or B and/or C, indicating seven situations including A alone, B alone, C alone, both A and B exist, both B and C exist, both A and C exist, and A, B and C exist. Similarly, the use of "at least one of A and B" in this specification and claims should be understood as "A alone, B alone, or both A and B exist".

The embodiments of the present disclosure are described above in conjunction with the accompanying drawings, but the present disclosure is not limited to the above-mentioned specific implementations. The above-mentioned specific implementations are merely illustrative and not restrictive. Under the guidance of the present disclosure, ordinary technicians in this field can also make many forms without departing from the scope of protection of the principles and the claims of the present disclosure, all of which fall within the scope of protection of the present disclosure.

## Claims

1. An information processing method, applied to a terminal, comprising:
obtaining first information, wherein the first information comprises information about a first discontinuous reception cycle (DRX cycle) and information about a second DRX cycle;
performing a DRX operation according to the first information.

2. The method according to claim 1, wherein a length of the second DRX cycle is unrelated to a length of the first DRX cycle.

3. The method according to claim 1, wherein the first DRX cycle matches a cycle of a data burst of XR service data, and the second DRX cycle matches a cycle of a packet data unit set (PDU set) of the XR service data.

4. The method according to claim 1, wherein the obtaining first information comprises:
obtaining the information about the first DRX cycle and the information about the second DRX cycle from a network device; or
obtaining the information about the first DRX cycle from the network device;
wherein the information about the first DRX cycle comprises one or more of a cycle length, a cycle start point, and number of cycles of the first DRX cycle, and/or the information about the second DRX cycle comprises one or more of a cycle length, a cycle start point, and number of cycles of the second DRX cycle.

5. The method according to claim 4, further comprising:
obtaining second information from the network device, wherein the second information is used to indicate that the terminal is allowed to trigger the second DRX cycle, and/or the second information is used to instruct the terminal to send third information to the network device, wherein the third information comprises information about the second DRX cycle.

6. The method according to claim 1, wherein the performing a DRX operation according to the first information comprises one or more of the following:
for a first data burst, activating the first DRX cycle according to the information about the first DRX cycle;
when time of entering a DRX active state of the first DRX cycle meets a first condition, performing a DRX operation of the second DRX cycle according to data buffering and transmission status of a first PDU set in the first data burst;
when transmission of the first data burst is completed, the terminal entering a DRX inactive state until a cycle start point of a next first DRX cycle.

7. The method according to claim 6, wherein the activating the first DRX cycle comprises one or more of the following manners:
receiving a first instruction sent by a network device, wherein the first instruction is used to instruct the terminal to enter a DRX inactive state and activate the first DRX cycle; the terminal entering the DRX inactive state and activating the first DRX cycle according to the first instruction;
if a uplink data packet currently sent is the last packet data unit (PDU) of the first data burst, after determining that the uplink data packet is sent or determining that the uplink data packet is sent successfully, the terminal entering the DRX inactive state and activating the first DRX cycle.

8. The method according to claim 6, wherein the performing a DRX operation of the second DRX cycle according to data buffering and transmission status of a first PDU set comprises one or more of the following:
receiving a second instruction sent by a network device, wherein the second instruction is used to instruct the terminal to enter a DRX inactive state and activate the second DRX cycle; the terminal entering the DRX inactive state and activating the second DRX cycle according to the second instruction;
activating the second DRX cycle based on a DRX timer;
if a uplink data packet currently sent is the last PDU of the first PDU set, after determining that the uplink data packet is sent or determining that the uplink data packet is sent successfully, the terminal entering the DRX inactive state and activating the second DRX cycle.

9. The method according to claim 4, further comprising:
sending a third instruction to the network device, wherein the third instruction is used to indicate that the terminal activates the first DRX cycle.

10. The method according to claim 4 or 9, further comprising one or more of the following:
sending a fourth instruction to the network device, wherein the fourth instruction is used to indicate that the terminal activates the second DRX cycle;
sending fourth information to the network device, wherein the fourth information comprises one or more of a cycle start point, number of cycles, and a cycle length of the second DRX cycle.

11. The method according to claim 7 or 8, further comprising:
receiving a fifth instruction sent by the network device, wherein the fifth instruction is used to indicate a way for the terminal to activate the first DRX cycle and/or a way for the terminal to activate the second DRX cycle.

12. An information processing method, applied to a network device, comprising:
sending first information to a terminal, wherein the first information comprises information about a first DRX cycle and information about a second DRX cycle, and the first information is used for the terminal to perform a DRX operation; or
sending the information about the first DRX cycle to the terminal, wherein the information about the first DRX cycle is used for the terminal to perform the DRX operation.

13. The method according to claim 12, further comprising:
sending second information to the terminal, wherein the second information is used to indicate that the terminal is allowed to trigger the second DRX cycle, and/or, the second information is used to instruct the terminal to send third information to the network device, wherein the third information comprises information about the second DRX cycle.

14. The method according to claim 12, wherein a length of the second DRX cycle is unrelated to a length of the first DRX cycle.

15. The method according to claim 12, wherein the first DRX cycle matches a cycle of a data burst of XR service data, and the second DRX cycle matches a cycle of a PDU set of the XR service data.

16. The method according to claim 12, further comprising one or more of the following:
sending a first instruction to the terminal, wherein the first instruction is used to instruct the terminal to enter a DRX inactive state and activate the first DRX cycle;
sending a second instruction to the terminal, wherein the second instruction is used to instruct the terminal to enter the DRX inactive state and activate the second DRX cycle.

17. The method according to claim 12, further comprising:
receiving a third instruction sent by the terminal, wherein the third instruction is used to indicate that the terminal activates the first DRX cycle;
activating the first DRX cycle according to the third instruction.

18. The method according to claim 12, further comprising:
receiving a fourth instruction sent by the terminal, wherein the fourth instruction is used to indicate that the terminal activates the second DRX cycle;
activating the second DRX cycle according to the fourth instruction.

19. The method according to claim 18, further comprising:
receiving fifth information sent by the terminal, wherein the fifth information comprises a cycle start point of the second DRX cycle and/or number of activating the second DRX cycle;
the activating the second DRX cycle according to the fourth instruction comprises:
activating the second DRX cycle according to the fourth instruction and the fifth information.

20. The method according to claim 12, further comprising:
sending a fifth instruction to the terminal, wherein the fifth instruction is used to indicate a way for the terminal to activate the first DRX cycle and/or a way for the terminal to activate the second DRX cycle.

21. An information processing device, applied to a terminal, comprising: a memory, a transceiver, and a processor:
wherein the memory is configured to store a computer program; the transceiver is configured to transmit and receive data under the control of the processor; and the processor is configured to read the computer program in the memory and perform following operations:
obtaining first information, wherein the first information comprises information about a first DRX cycle and information about a second DRX cycle;
performing a DRX operation according to the first information.

22. The device according to claim 21, wherein a length of the second DRX cycle is unrelated to a length of the first DRX cycle.

23. The device according to claim 21, wherein the first DRX cycle matches a cycle of a data burst of XR service data, and the second DRX cycle matches a cycle of a PDU set of the XR service data.

24. The device according to claim 21, wherein the processor is further configured to read the computer program in the memory and perform following operations:
obtaining the information about the first DRX cycle and the information about the second DRX cycle from a network device; or
obtaining the information about the first DRX cycle from the network device;
wherein the information about the first DRX cycle comprises one or more of a cycle length, a cycle start point, and number of cycles of the first DRX cycle, and/or the information about the second DRX cycle comprises one or more of a cycle length, a cycle start point, and number of cycles of the second DRX cycle.

25. The device according to claim 24, wherein the processor is further configured to read the computer program in the memory and perform following operations:
obtaining second information from the network device, wherein the second information is used to indicate that the terminal is allowed to trigger the second DRX cycle, and/or the second information is used to instruct the terminal to send third information to the network device, wherein the third information comprises information about the second DRX cycle.

26. The device according to claim 21, wherein the processor is further configured to read the computer program in the memory and perform following operations:
for a first data burst, activating the first DRX cycle according to the information about the first DRX cycle;
when time of entering a DRX active state of the first DRX cycle meets a first condition, performing a DRX operation of the second DRX cycle according to data buffering and transmission status of a first PDU set in the first data burst;
when transmission of the first data burst is completed, entering a DRX inactive state until a cycle start point of a next first DRX cycle.

27. The device according to claim 26, wherein the processor is further configured to read the computer program in the memory and perform following operations:
receiving a first instruction sent by a network device, wherein the first instruction is used to instruct the terminal to enter a DRX inactive state and activate the first DRX cycle; entering the DRX inactive state and activating the first DRX cycle according to the first instruction;
if it is determined that a uplink data packet currently sent is the last packet data unit (PDU) of the first data burst, after determining that the uplink data packet is sent or determining that the uplink data packet is sent successfully, entering the DRX inactive state and activating the first DRX cycle.

28. The device according to claim 26, wherein the processor is further configured to read the computer program in the memory and perform following operations:
receiving a second instruction sent by a network device, wherein the second instruction is used to instruct the terminal to enter a DRX inactive state and activate the second DRX cycle; entering the DRX inactive state and activating the second DRX cycle according to the second instruction;
activating the second DRX cycle based on a DRX timer;
if it is determined that a uplink data packet currently sent is the last PDU of the first PDU set, after determining that the uplink data packet is sent or determining that the uplink data packet is sent successfully, entering the DRX inactive state and activating the second DRX cycle.

29. The device according to claim 24, wherein the processor is further configured to read the computer program in the memory and perform following operations:
sending a third instruction to the network device, wherein the third instruction is used to indicate that the terminal activates the first DRX cycle.

30. The device according to claim 24, wherein the processor is further configured to read the computer program in the memory and perform one or more of the following operations:
sending a fourth instruction to the network device, wherein the fourth instruction is used to indicate that the terminal activates the second DRX cycle;
sending fourth information to the network device, wherein the fourth information comprises one or more of a cycle start point, number of cycles, and a cycle length of the second DRX cycle.

31. The device according to claim 27 or 28, wherein the processor is further configured to read the computer program in the memory and perform following operations:
receiving a fifth instruction sent by the network device, wherein the fifth instruction is used to indicate a way for the terminal to activate the first DRX cycle and/or a way for the terminal to activate the second DRX cycle.

32. An information processing device, applied to a network device, comprising: a memory, a transceiver, and a processor:
wherein the memory is configured to store a computer program; the transceiver is configured to transmit and receive data under the control of the processor; and the processor is configured to read the computer program in the memory and perform following operations:
sending first information to a terminal, wherein the first information comprises information about a first DRX cycle and information about a second DRX cycle, and the first information is used for the terminal to perform a DRX operation; or
sending the information about the first DRX cycle to the terminal, wherein the information about the first DRX cycle is used for the terminal to perform the DRX operation.

33. The device according to claim 32, wherein the processor is further configured to read the computer program in the memory and perform one or more of the following operations:
sending second information to the terminal, wherein the second information is used to indicate that the terminal is allowed to trigger the second DRX cycle, and/or, the second information is used to instruct the terminal to send third information to the network device, wherein the third information comprises information about the second DRX cycle.

34. The device according to claim 32, wherein a length of the second DRX cycle is unrelated to a length of the first DRX cycle.

35. The device according to claim 32, wherein the first DRX cycle matches a cycle of a data burst of XR service data, and the second DRX cycle matches a cycle of a PDU set of the XR service data.

36. The device according to claim 32, wherein the processor is further configured to read the computer program in the memory and perform one or more of the following operations:
sending a first instruction to the terminal, wherein the first instruction is used to instruct the terminal to enter a DRX inactive state and activate the first DRX cycle;
sending a second instruction to the terminal, wherein the second instruction is used to instruct the terminal to enter the DRX inactive state and activate the second DRX cycle.

37. The device according to claim 32, wherein the processor is further configured to read the computer program in the memory and perform following operations:
receiving a third instruction sent by the terminal, wherein the third instruction is used to indicate that the terminal activates the first DRX cycle;
activating the first DRX cycle according to the third instruction.

38. The device according to claim 32, wherein the processor is further configured to read the computer program in the memory and perform following operations:
receiving a fourth instruction sent by the terminal, wherein the fourth instruction is used to indicate that the terminal activates the second DRX cycle;
activating the second DRX cycle according to the fourth instruction.

39. The device according to claim 38, wherein the processor is further configured to read the computer program in the memory and perform following operations:
receiving fifth information sent by the terminal, wherein the fifth information comprises a cycle start point of the second DRX cycle and/or number of activating the second DRX cycle;
activating the second DRX cycle according to the fourth instruction and the fifth information.

40. The device according to claim 32, wherein the processor is further configured to read the computer program in the memory and perform following operations:
sending a fifth instruction to the terminal, wherein the fifth instruction is used to indicate a way for the terminal to activate the first DRX cycle and/or a way for the terminal to activate the second DRX cycle.

41. An information processing device, applied to a terminal, comprising:
a first obtaining unit, configured to obtain first information, wherein the first information comprises information about a first DRX cycle and information about a second DRX cycle;
a first processing unit, configured to perform a DRX operation according to the first information.

42. The device according to claim 41, wherein a length of the second DRX cycle is unrelated to a length of the first DRX cycle.

43. The device according to claim 41, wherein the first DRX cycle matches a cycle of a data burst of XR service data, and the second DRX cycle matches a cycle of a packet data unit set (PDU set) of the XR service data.

44. The device according to claim 41, wherein the first obtaining unit is configured to:
obtain the information about the first DRX cycle and the information about the second DRX cycle from a network device; or
obtain the information about the first DRX cycle from the network device;
wherein the information about the first DRX cycle comprises one or more of a cycle length, a cycle start point, and number of cycles of the first DRX cycle, and/or the information about the second DRX cycle comprises one or more of a cycle length, a cycle start point, and number of cycles of the second DRX cycle.

45. The device according to claim 44, wherein the first obtaining unit is further configured to:
obtain second information from the network device, wherein the second information is used to indicate that the terminal is allowed to trigger the second DRX cycle, and/or the second information is used to instruct the terminal to send third information to the network device, wherein the third information comprises information about the second DRX cycle.

46. The device according to claim 41, wherein the first processing unit is configured to perform one or more of the following:
for a first data burst, activate the first DRX cycle according to the information about the first DRX cycle;
when time of entering a DRX active state of the first DRX cycle meets a first condition, perform a DRX operation of the second DRX cycle according to data buffering and transmission status of a first PDU set in the first data burst;
when transmission of the first data burst is completed, the terminal enters a DRX inactive state until a cycle start point of a next first DRX cycle.

47. The device according to claim 46, wherein the first processing unit is configured to activate the first DRX cycle in one or more of the following manners:
receiving a first instruction sent by a network device, wherein the first instruction is used to instruct the terminal to enter a DRX inactive state and activate the first DRX cycle; the terminal entering the DRX inactive state and activating the first DRX cycle according to the first instruction;
if a uplink data packet currently sent is the last packet data unit (PDU) of the first data burst, after determining that the uplink data packet is sent or determining that the uplink data packet is sent successfully, the terminal entering the DRX inactive state and activating the first DRX cycle.

48. The device according to claim 46, wherein the first processing unit is configured to perform the DRX operation of the second DRX cycle in one or more of the following manners:
receiving a second instruction sent by a network device, wherein the second instruction is used to instruct the terminal to enter a DRX inactive state and activate the second DRX cycle; the terminal entering the DRX inactive state and activating the second DRX cycle according to the second instruction;
activating the second DRX cycle based on a DRX timer;
if a uplink data packet currently sent is the last PDU of the first PDU set, after determining that the uplink data packet is sent or determining that the uplink data packet is sent successfully, the terminal entering the DRX inactive state and activating the second DRX cycle.

49. The device according to claim 44, further comprising:
a first sending unit, configured to send a third instruction to the network device, wherein the third instruction is used to indicate that the terminal activates the first DRX cycle.

50. The device according to claim 44 or 49, further comprising one or more of the following:
a second sending unit, configured to send a fourth instruction to the network device, wherein the fourth instruction is used to indicate that the terminal activates the second DRX cycle;
a third sending unit, configured to send fourth information to the network device, wherein the fourth information comprises one or more of a cycle start point, number of cycles, and a cycle length of the second DRX cycle.

51. The device according to claim 47 or 48, further comprising:
a first receiving unit, configured to receive a fifth instruction sent by the network device, wherein the fifth instruction is used to indicate a way for the terminal to activate the first DRX cycle and/or a way for the terminal to activate the second DRX cycle.

52. An information processing device, applied to a network device, comprising:
a first sending unit, configured to send first information to a terminal, wherein the first information comprises information about a first DRX cycle and information about a second DRX cycle, and the first information is used for the terminal to perform a DRX operation; or
send the information about the first DRX cycle to the terminal, wherein the information about the first DRX cycle is used for the terminal to perform the DRX operation.

53. The device according to claim 52, wherein the first sending unit is further configured to:
send second information to the terminal, wherein the second information is used to indicate that the terminal is allowed to trigger the second DRX cycle, and/or, the second information is used to instruct the terminal to send third information to the network device, wherein the third information comprises information about the second DRX cycle.

54. The device according to claim 52, wherein a length of the second DRX cycle is unrelated to a length of the first DRX cycle.

55. The device according to claim 52, wherein the first DRX cycle matches a cycle of a data burst of XR service data, and the second DRX cycle matches a cycle of a PDU set of the XR service data.

56. The device according to claim 52, further comprising one or more of the following:
a second sending unit, configured to send a first instruction to the terminal, wherein the first instruction is used to instruct the terminal to enter a DRX inactive state and activate the first DRX cycle;
a third sending unit, configured to send a second instruction to the terminal, wherein the second instruction is used to instruct the terminal to enter the DRX inactive state and activate the second DRX cycle.

57. The device according to claim 52, further comprising:
a first receiving unit, configured to receive a third instruction sent by the terminal, wherein the third instruction is used to indicate that the terminal activates the first DRX cycle;
a first processing unit, configured to activate the first DRX cycle according to the third instruction.

58. The device according to claim 52, further comprising:
a second receiving unit, configured to receive a fourth instruction sent by the terminal, wherein the fourth instruction is used to indicate that the terminal activates the second DRX cycle;
a second processing unit, configured to activate the second DRX cycle according to the fourth instruction.

59. The device according to claim 58, further comprising:
a third receiving unit, configured to receive fifth information sent by the terminal, wherein the fifth information comprises a cycle start point of the second DRX cycle and/or number of activating the second DRX cycle;
wherein the second processing unit is further configured to activate the second DRX cycle according to the fourth instruction and the fifth information.

60. The device according to claim 52, further comprising:
a fourth sending unit, configured to send a fifth instruction to the terminal, wherein the fifth instruction is used to indicate a way for the terminal to activate the first DRX cycle and/or a way for the terminal to activate the second DRX cycle.

61. A processor-readable storage medium, **characterized in that** the processor-readable storage medium stores a computer program, and the computer program is configured to activate a processor to perform the method according to any one of claims 1 to 20.
